# EUROPEAN PATENT SPECIFICATION

(11) **EP 3 015 471 B1**
(45) Date of publication and mention of the grant of the patent: **28.02.2018**
(21) Application number: 15189287.4
(22) Date of filing: 12.10.2015
(51) Int. Cl.: C08K 5/544, C07F 7/18, C08K 5/54, C09D 1/00

(54) **NOVEL BISALKOXYSILANE COMPOUND AND ITS PRODUCTION METHOD**
NEUARTIGE BISALKOXYSILANVERBINDUNG UND DEREN HERSTELLUNGSVERFAHREN
NOUVEAU COMPOSÉ BISALKOXYSILANE ET SON PROCÉDÉ DE PRODUCTION

(30) Priority: 31.10.2014 JP 2014222299
(43) Date of publication of application: 04.05.2016
(73) Proprietor: Shin-Etsu Chemical Co., Ltd., Tokyo (JP)
(72) Inventor: KAWAKAMI, Masato, Joetsu-shi, Niigata (JP); TONOMURA, Yoichi, Joetsu-shi, Niigata (JP); KUBOTA, Tohru, Joetsu-shi, Niigata (JP)
(74) Representative: Ter Meer Steinmeister & Partner

(56) References cited:
- JP-A- 2010 100 544
- US-A1- 2003 049 486
- DATABASE CA [Online] CHEMICAL ABSTRACTS SERVICE, COLUMBUS, OHIO, US; 2003, SPRAUL, BRYAN K. ET AL: "Efficient synthesis of sol-gel materials for nonlinear optical applications", XP002755454, retrieved from STN Database accession no. 2003:210767

## Description

### TECHNICAL FIELD

The present invention relates to a bisalkoxysilane compound which is useful as a silane coupling agent, surface treating agent, resin additive, coating additive, adhesive, fiber treating agent, and the like. This invention also relates to its production method.

### BACKGROUND ART

Aminosilane compounds are useful for silane coupling agent, surface treating agent, resin additive, coating additive, and adhesive, and aminosilane compounds having hydroxyethyl group are particularly suitable for use in such application due to the high degree of freedom enabled by the presence of a spacer between the amino group and the silyl group. Examples of such aminosilane compound having the hydroxyethyl group include dimethylaminoethyloxypropyltrimethoxysilane and dimethylaminoethyloxypropylmethyldimethoxysilane, and these compounds have been described to be useful for use as the silane coupling agent, surface treating agent, resin additive, coating additive, and adhesive (Patent document 1: Korean Patent No. 10-1249352). Such aminosilane compounds having the hydroxyethyl group also include compounds having carbonyl group, sulfonyl group, carbamoyl group, or oxycarbonyl group on the nitrogen demonstrating the high variety of the aminosilane compounds (Patent document 2: USSN 2003/0196958).

All of these compounds have only one alkoxysilyl moiety per molecule, and sufficient coupling effect may not be realized at the alkoxysilyl group moiety when the compound is used as a silane coupling agent, surface treating agent, resin additive, coating additive, or adhesive.

### Citation List

**Patent Document** 1: **Korean Patent No.** 10-1249352
**Patent Document** 2: USSN 2003/0196958.

N,N-Bis(Trimethysilylpropoxy-ethyl)-aniline is known from Polymer Preprints 2003, 44(1), 125, with CAS registry number 532930-34-0; JP2010-100544 discloses 3-[3-(diethoxymethylsilyl)propoxy)-N,N-diethyl-2-[(trimethylsilyl)oxy]-1-propanamine and related compounds as coating additives; US2003/049486 discloses bis(trialkoxysilylpropyl)amines as coating additives.

### DISCLOSURE OF THE INVENTION

The present invention has been completed in view of the situation as described above, and an object of the present invention is to provide a compound which is capable of exhibiting a higher effect than the compounds as described above when used as a silane coupling agent, coating additive, adhesive, or the like. Another object of the present invention is to provide a method for producing such compound.

The inventors of the present invention conducted intensive study and found out that a novel bisalkoxysilane compound of the general formula (1) having two alkoxysilyl moieties in the molecule can be obtained by dihydrosilylation of a particular diolefin compound represented by the general formula (2) as described below, and since this bisalkoxysilane compound has two alkoxysilyl moieties in the molecule, the merit of the alkoxysilyl moiety will be fully realized when the compound is used as a coating additive, adhesive, silane coupling agent, or the like. The present invention has been completed on the basis of such findings.

Accordingly, the present invention provides the bisalkoxysilane compound and its production method as described below.
[1] A bisalkoxysilane compound represented by the following general formula (1): 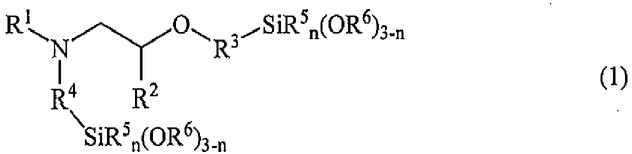 wherein R¹ is hydrogen atom or an unsubstituted monovalent hydrocarbon group **containing 1 to 10 carbon** atoms; and R² is hydrogen atom or an unsubstituted or substituted monovalent hydrocarbon group containing 1 to 10 carbon atoms wherein the substituted monovalent hydrocarbon group has a substituent selected from among alkoxy group and a group comprising a halogen atom; R³ **is a straight chain or branched divalent hydrocarbon group containing 3 to 10 carbon atoms,** R⁴ **is a straight chain or branched divalent hydrocarbon group containing 3 to 10 carbon atoms optionally containing a heteroatom,** R⁵ and R⁶ **are respectively a monovalent hydrocarbon group containing 1 to 10 carbon atoms, and n is 0, 1, or 2.**
**[2] A method for producing a bisalkoxysilane compound of [1] comprising the step of reacting a diolefin compound represented by the following general formula (2):** 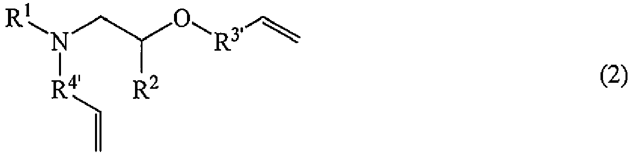 wherein R¹ and R² are as defined above, R^{3'} is a straight chain or branched divalent hydrocarbon group containing 1 to 8 carbon atoms, and R^{4'} is a straight chain or branched divalent hydrocarbon group containing 1 to 8 carbon atoms optionally containing a heteroatom with an organosilane compound represented by the following general formula (3): 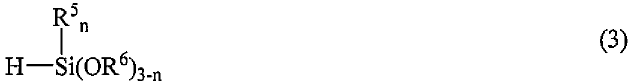 wherein R⁵ and R⁶ are as defined above, and n is 0, 1, or 2 in the presence of a platinum catalyst.

### ADVANTAGEOUS EFFECTS OF THE INVENTION

The bisalkoxysilane compound provided by the present invention has two alkoxysilyl moieties in the molecule, and therefore, when the compound is used as a coating additive, adhesive, silane coupling agent, fiber treating agent, surface treating agent, resin additive, or the like, the merit of the alkoxysilyl moiety will be fully realized. Accordingly, properties of the resulting product will be improved by the addition of the compound, and the use of such compound is useful for such application.

### BRIEF DESCRIPTION OF THE DRAWINGS

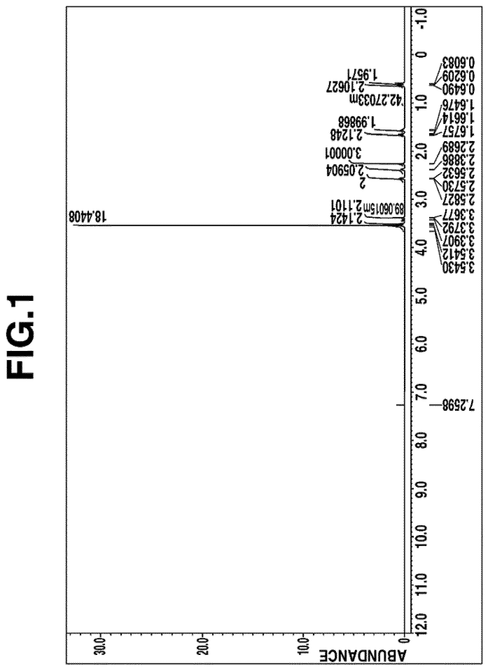

FIG. 1 is a ¹H-NMR spectrum of the 3-oxy-6-trimethoxysilylhexyl-3'-trimethoxysilylpropyl-methylamine obtained in Example 1.

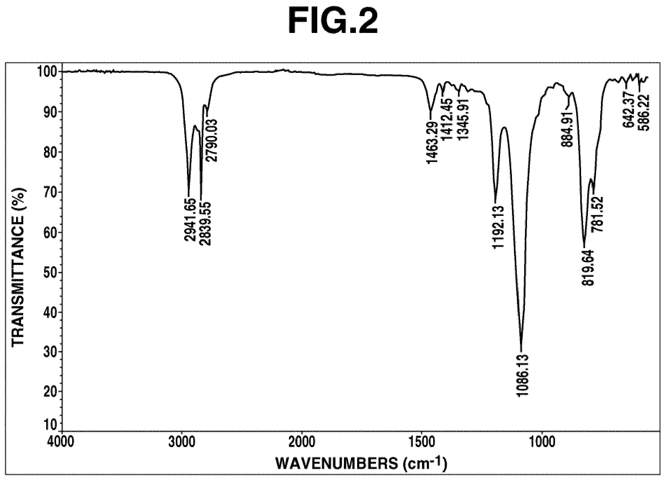

FIG. 2 is an IR spectrum of the 3-oxy-6-trimethoxysilylhexyl-3'-trimethoxysilylpropyl-methylamine obtained in Example 1.

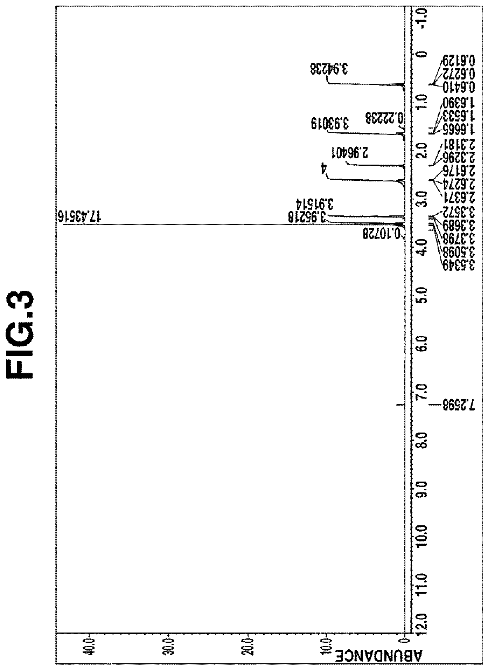

FIG. 3 is a ¹H-NMR spectrum of the bis(trimethoxysilylpropyloxyethyl)methylamine obtained in Example 2.

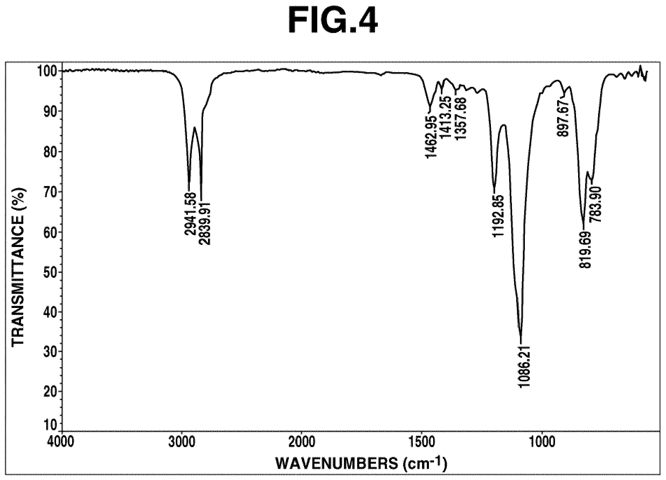

FIG. 4 is an IR spectrum of the bis(trimethoxysilylpropyloxyethyl)methylamine obtained in Example 2.

### DESCRIPTION OF THE PREFERRED EMBODIMENTS

The bisalkoxysilane compound of the present invention is a compound represented by the following general formula (1): 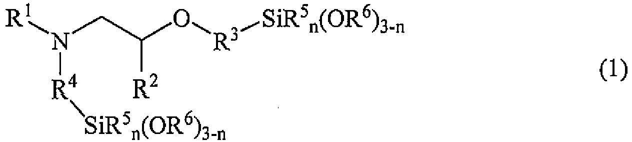 **wherein R¹ is a hydrogen atom or an unsubstituted monovalent hydrocarbon group containing 1 to 10 carbon** atoms; and R2 is hydrogen atom or an unsubstituted or substituted monovalent hydrocarbon group containing 1 to 10 carbon atoms wherein the substituted monovalent hydrocarbon group has a substituent selected from among alkoxy group and a group comprising a halogen atom; R³ is **a straight chain or branched divalent hydrocarbon group containing 3 to 10 carbon atoms,** R⁴ is **a straight chain or branched divalent hydrocarbon group containing 3 to 10 carbon atoms optionally containing a heteroatom, R⁵ and R⁶ are respectively a monovalent hydrocarbon group containing 1 to 10 carbon atoms, and n is 0, 1, or 2.**

**More specifically,** R¹ **is hydrogen atom or an unsubstituted monovalent hydrocarbon group containing 1 to 10, and more preferably 1 to 6 carbon atoms** such as straight chain, branched, or cyclic alkyl group, alkenyl group, aryl group, or aralkyl group. Examples include straight chain alkyl groups such as methyl group, ethyl group, propyl group, butyl group, pentyl group, hexyl group, heptyl group, octyl group, and decyl group; branched alkyl groups such as isopropyl group, isobutyl group, and tert-butyl group; cyclic alkyl groups such as cyclopentyl group and cyclohexyl group; alkenyl groups such as vinyl group, allyl group, and propenyl group; aryl groups such as phenyl group and tolyl group; and aralkyl groups such as benzyl group and phenethyl group. The preferred are methyl group and ethyl group in view of the high utility of the resulting product and the relatively low boiling point of the resulting product.

R² is hydrogen atom or an unsubstituted or substituted monovalent hydrocarbon group containing 1 to 10, and preferably 1 to 6 carbon atoms, and wherein the hydrocarbon group, when substituted, has a substituent from among alkoxy group and a group comprising a halogen atom, and wherein the hydrocarbon may be such as straight chain, branched, or cyclic alkyl group, alkenyl group, aryl group, or aralkyl group. Examples include straight chain alkyl groups such as methyl group, ethyl group, propyl group, butyl group, pentyl group, hexyl group, heptyl group, octyl group, and decyl group; branched alkyl groups such as isopropyl group, isobutyl group, and tert-butyl group; cyclic alkyl groups such as cyclopentyl group and cyclohexyl group; alkenyl groups such as vinyl group, allyl group, and propenyl group; aryl groups such as phenyl group and tolyl group; and aralkyl groups such as benzyl group and phenethyl group. In view of the availability of the starting material, the preferred are hydrogen atom and methyl group.

The monovalent hydrocarbon groups of R² may have some or all of their hydrogen atoms respectively substituted with a substituent. Exemplary substituents include alkoxy groups such as methoxy group, ethoxy group, and (iso)propoxy group, groups comprising a halogen atom such as fluorine atom, chlorine atom, bromine atom, or iodine atom, and where the substituents may be used alone or in combination of two or more.

R³ and R⁴ are respectively a straight chain or branched divalent hydrocarbon group containing 3 to 10, and preferably 3 to 6 carbon atoms. Exemplary such groups include alkylene groups such as trimethylene group, tetramethylene group, hexamethylene group, and isobutylene group, and the preferred is trimethylene group in view of the availability of the starting material. R⁴ may contain a heteroatom such as oxygen atom, nitrogen atom, or sulfur atom.

R⁵ and R⁶ are respectively a monovalent hydrocarbon group containing 1 to 10, preferably 1 to 6, and more preferably 1 to 3 carbon atoms such as straight chain, branched, or cyclic alkyl group, alkenyl group, aryl group, or aralkyl group. Exemplary such groups include straight chain alkyl groups such as methyl group, ethyl group, propyl group, butyl group, pentyl group, hexyl group, heptyl group, octyl group, and decyl group, branched alkyl groups such as isopropyl group, isobutyl group, and tert-butyl group, cyclic alkyl groups such as cyclopentyl group and cyclohexyl group, alkenyl groups such as vinyl group, allyl group, and propenyl group, aryl groups such as phenyl group and tolyl group, and aralkyl groups such as benzyl group and phenethyl group. The preferred are methyl group and ethyl group in view of the relatively low boiling point of the intended resulting compound.

As described above, in the bisalkoxysilane compound represented by the general formula (1) having substituents, the distance between the nitrogen atom and each of the two alkoxysilyl moieties is preferably different, and this distance is longer than conventional compounds. Accordingly, a monolayer of the bisalkoxysilane compound represented by the general formula (1) provided by the present invention will be formed when the compound is used as a coating additive, fiber treating agent, silane coupling agent, surface treating agent, or the like, and the merit of the alkoxysilyl moieties is highly likely to be fully realized when the compound is used for such application.

Examples of the bisalkoxysilane compound represented by the general formula (1) include:
bis(trimethoxysilylpropyloxyethyl) amine,
bis(methyldimethoxysilylpropyloxyethyl)amine,
bis(dimethylmethoxysilylpropyloxyethyl)amine,
bis(trimethoxysilylpropyloxyethyl)methylamine,
bis(methyldimethoxysilylpropyloxyethyl)methylamine,
bis(dimethylmethoxysilylpropyloxyethyl)methylamine,
bis(trimethoxysilylpropyloxyethyl)ethylamine,
bis(methyldimethoxysilylpropyloxyethyl)ethylamine,
bis(dimethylmethoxysilylpropyloxyethyl)ethylamine,
bis(triethoxysilylpropyloxyethyl)amine,
bis(methyldiethoxysilylpropyloxyethyl)amine,
bis(dimethylethoxysilylpropyloxyethyl)amine,
bis(triethoxysilylpropyloxyethyl)methylamine,
bis(methyldiethoxysilylpropyloxyethyl)methylamine,
bis(dimethylethoxysilylpropyloxyethyl)methylamine,
bis(triethoxysilylpropyloxyethyl)ethylamine,
bis(methyldiethoxysilylpropyloxyethyl)ethylamine,
bis(dimethylethoxysilylpropyloxyethyl)ethylamine,
bis(trimethoxysilylbutyloxyethyl)amine,
bis(methyldimethoxysilylbutyloxyethyl)amine,
bis(dimethylmethoxysilylbutyloxyethyl)amine,
bis(trimethoxysilylbutyloxyethyl)methylamine,
bis(methyldimethoxysilylbutyloxyethyl)methylamine,
bis(dimethylmethoxysilylbutyloxyethyl)methylamine,
bis(trimethoxysilylbutyloxyethyl)ethylamine,
bis(methyldimethoxysilylbutyloxyethyl)ethylamine,
bis(dimethylmethoxysilylbutyloxyethyl)ethylamine,
bis(triethoxysilylbutyloxyethyl)amine,
bis(methyldiethoxysilylbutyloxyethyl)amine,
bis(dimethylethoxysilylbutyloxyethyl)amine,
bis(triethoxysilylbutyloxyethyl)methylamine,
bis(methyldiethoxysilylbutyloxyethyl)methylamine,
bis(dimethylethoxysilylbutyloxyethyl)methylamine,
bis(triethoxysilylbutyloxyethyl)ethylamine,
bis(methyldiethoxysilylbutyloxyethyl)ethylamine,
bis(dimethylethoxysilylbutyloxyethyl)ethylamine,
bis(trimethoxysilylpentyloxyethyl)amine,
bis(methyldimethoxysilylpentyloxyethyl)amine,
bis(dimethylmethoxysilylpentyloxyethyl)amine,
bis(trimethoxysilylpentyloxyethyl)methylamine,
bis(methyldimethoxysilylpentyloxyethyl)methylamine,
bis(dimethylmethoxysilylpentyloxyethyl)methylamine,
bis(trimethoxysilylpentyloxyethyl)ethylamine,
bis(methyldimethoxysilylpentyloxyethyl)ethylamine,
bis(dimethylmethoxysilylpentyloxyethyl)ethylamine,
bis(triethoxysilylpentyloxyethyl)amine,
bis(methyldiethoxysilylpentyloxyethyl)amine,
bis(dimethylethoxysilylpentyloxyethyl)amine,
bis(triethoxysilylpentyloxyethyl)methylamine,
bis(methyldiethoxysilylpentyloxyethyl)methylamine,
bis(dimethylethoxysilylpentyloxyethyl)methylamine,
bis(triethoxysilylpentyloxyethyl)ethylamine,
bis(methyldiethoxysilylpentyloxyethyl)ethylamine,
bis(dimethylethoxysilylpentyloxyethyl)ethylamine,
bis(trimethoxysilylhexyloxyethyl)amine,
bis(methyldimethoxysilylhexyloxyethyl) amine,
bis(dimethylmethoxysilylhexyloxyethyl)amine,
bis(trimethoxysilylhexyloxyethyl)methylamine,
bis(methyldimethoxysilylhexyloxyethyl)methylamine,
bis(dimethylmethoxysilylhexyloxyethyl)methylamine,
bis(trimethoxysilylhexyloxyethyl)ethylamine,
bis(methyldimethoxysilylhexyloxyethyl)ethylamine,
bis(dimethylmethoxysilylhexyloxyethyl)ethylamine,
bis(triethoxysilylhexyloxyethyl)amine,
bis(methyldiethoxysilylhexyloxyethyl)amine,
bis(dimethylethoxysilylhexyloxyethyl)amine,
bis(triethoxysilylhexyloxyethyl)methylamine,
bis(methyldiethoxysilylhexyloxyethyl)methylamine,
bis(dimethylethoxysilylhexyloxyethyl)methylamine,
bis(triethoxysilylhexyloxyethyl)ethylamine,
bis(methyldiethoxysilylhexyloxyethyl)ethylamine,
bis(dimethylethoxysilylhexyloxyethyl)ethylamine,
bis(2-methyl-3-oxy-6-trimethoxysilylhexyl)amine,
bis(2-methyl-3-oxy-6-methyldimethoxysilylhexyl)amine,
bis(2-methyl-3-oxy-6-dimethylmethoxysilylhexyl)amine,
bis(2-methyl-3-oxy-6-trimethoxysilylhexyl)methylamine,
bis(2-methyl-3-oxy-6-methyldimethoxysilylhexyl)methylamine,
bis(2-methyl-3-oxy-6-dimethylmethoxysilylhexyl)methylamine,
bis(2-methyl-3-oxy-6-trimethoxysilylhexyl)ethylamine,
bis(2-methyl-3-oxy-6-methyldimethoxysilylhexyl)ethylamine,
bis(2-methyl-3-oxy-6-dimethylmethoxysilylhexyl)ethylamine,
bis(2-methyl-3-oxy-6-triethoxysilylhexyl)amine,
bis(2-methyl-3-oxy-6-methyldiethoxysilylhexyl)amine,
bis(2-methyl-3-oxy-6-dimethylethoxysilylhexyl)amine,
bis(2-methyl-3-oxy-6-triethoxysilylhexyl)methylamine,
bis(2-methyl-3-oxy-6-methyldiethoxysilylhexyl)methylamine,
bis(2-methyl-3-oxy-6-dimethylethoxysilylhexyl)methylamine,
bis(2-methyl-3-oxy-6-triethoxysilylhexyl)ethylamine,
bis(2-methyl-3-oxy-6-methyldiethoxysilylhexyl)ethylamine,
bis(2-methyl-3-oxy-6-dimethylethoxysilylhexyl)ethylamine,
bis(2-ethyl-3-oxy-6-trimethoxysilylhexyl)amine,
bis(2-ethyl-3-oxy-6-methyldimethoxysilylhexyl)amine,
bis(2-ethyl-3-oxy-6-dimethylmethoxysilylhexyl)amine,
bis(2-ethyl-3-oxy-6-trimethoxysilylhexyl)methylamine,
bis(2-ethyl-3-oxy-6-methyldimethoxysilylhexyl)methylamine,
bis(2-ethyl-3-oxy-6-dimethylmethoxysilylhexyl)methylamine,
bis(2-ethyl-3-oxy-6-trimethoxysilylhexyl)ethylamine,
bis(2-ethyl-3-oxy-6-methyldimethoxysilylhexyl)ethylamine,
bis(2-ethyl-3-oxy-6-dimethylmethoxysilylhexyl)ethylamine,
bis(2-ethyl-3-oxy-6-triethoxysilylhexyl)amine,
bis(2-ethyl-3-oxy-6-methyldiethoxysilylhexyl)amine,
bis(2-ethyl-3-oxy-6-dimethylethoxysilylhexyl)amine,
bis(2-ethyl-3-oxy-6-triethoxysilylhexyl)methylamine,
bis(2-ethyl-3-oxy-6-methyldiethoxysilylhexyl)methylamine,
bis(2-ethyl-3-oxy-6-dimethylethoxysilylhexyl)methylamine,
bis(2-ethyl-3-oxy-6-triethoxysilylhexyl)ethylamine,
bis(2-ethyl-3-oxy-6-methyldiethoxysilylhexyl)ethylamine,
bis(2-ethyl-3-oxy-6-dimethylethoxysilylhexyl)ethylamine,
3-oxy-6-trimethoxysilylhexyl-3'-trimethoxysilylpropylamine,
3-oxy-6-methyldimethoxysilylhexyl-3'-methyldimethoxysilylpropylamine,
3-oxy-6-dimethylmethoxysilylhexyl-3'-dimethylmethoxysilylpropylamine,
3-oxy-6-triethoxysilylhexyl-3'-triethoxysilylpropylamine,
3-oxy-6-methyldiethoxysilylhexyl-3'-methyldiethoxysilylpropylamine,
3-oxy-6-dimethylethoxysilylhexyl-3'-dimethylethoxysilylpropyl-methylamine,
3-oxy-6-trimethoxysilylhexyl-3'-trimethoxysilylpropyl-methylamine,
3-oxy-6-methyldimethoxysilylhexyl-3'-methyldimethoxysilylpropyl-methylamine,
3-oxy-6-dimethylmethoxysilylhexyl-3'-dimethylmethoxysilylpropyl-methylamine,
3-oxy-6-triethoxysilylhexyl-3'-triethoxysilylpropyl-methylamine,
3-oxy-6-methyldiethoxysilylhexyl-3'-methyldiethoxysilylpropyl-methylamine,
3-oxy-6-dimethylethoxysilylhexyl-3'-dimethylethoxysilylpropyl-methylamine,
3-oxy-6-trimethoxysilylhexyl-3'-trimethoxysilylpropyl-ethylamine,
3-oxy-6-methyldimethoxysilylhexyl-3'-methyldimethoxysilylpropyl-ethylamine,
3-oxy-6-dimethylmethoxysilylhexyl-3'-dimethylmethoxysilylpropyl-ethylamine,
3-oxy-6-triethoxysilylhexyl-3'-triethoxysilylpropyl-ethylamine,
3-oxy-6-methyldiethoxysilylhexyl-3'-methyldiethoxysilylpropyl-ethylamine,
3-oxy-6-dimethylethoxysilylhexyl-3'-dimethylethoxysilylpropyl-ethylamine,
3-oxy-7-trimethoxysilylheptyl-4'-trimethoxysilylbutyl-methylamine,
3-oxy-7-methyldimethoxysilylheptyl-4'-methyldimethoxysilylbutyl-methylamine,
3-oxy-7-dimethylmethoxysilylheptyl-4'-dimethylmethoxysilylbutyl-methylamine,
3-oxy-7-triethoxysilylheptyl-4'-triethoxysilylbutyl-methylamine,
3-oxy-7-methyldiethoxysilylheptyl-4'-methyldiethoxysilylbutyl-methylamine,
3-oxy-7-dimethylethoxysilylheptyl-4'-dimethylethoxysilylbutyl-methylamine,
3-oxy-7-trimethoxysilylheptyl-4'-trimethoxysilylbutyl-ethylamine,
3-oxy-7-methyldimethoxysilylheptyl-4'-methyldimethoxysilylbutyl-ethylamine,
3-oxy-7-dimethylmethoxysilylheptyl-4'-dimethylmethoxysilylbutyl-ethylamine,
3-oxy-7-triethoxysilylheptyl-4'-triethoxysilylbutyl-ethylamine,
3-oxy-7-methyldiethoxysilylheptyl-4'-methyldiethoxysilylbutyl-ethylamine,
3-oxy-7-dimethylethoxysilylheptyl-4'-dimethylethoxysilylbutyl-ethylamine,
3-oxy-8-trimethoxysilyloctyl-5'-trimethoxysilylpentyl-methylamine,
3-oxy-8-methyldimethoxysilyloctyl-5'-methyldimethoxysilylpentyl-methylamine,
3-oxy-8-dimethylmethoxysilyloctyl-5'-dimethylmethoxysilylpentyl-methylamine,
3-oxy-8-triethoxysilyloctyl-5'-triethoxysilylpentyl-methylamine,
3-oxy-8-methyldiethoxysilyloctyl-5'-methyldiethoxysilylpentyl-methylamine,
3-oxy-8-dimethylethoxysilyloctyl-5'-dimethylethoxysilylpentyl-methylamine,
3-oxy-8-trimethoxysilyloctyl-5'-trimethoxysilylpentyl-ethylamine,
3-oxy-8-methyldimethoxysilyloctyl-5'-methyldimethoxysilylpentyl-ethylamine,
3-oxy-8-dimethylmethoxysilyloctyl-5'-dimethylmethoxysilylpentyl-ethylamine,
3-oxy-8-triethoxysilyloctyl-5'-triethoxysilylpentyl-ethylamine,
3-oxy-8-methyldiethoxysilyloctyl-5'-methyldiethoxysilylpentyl-ethylamine,
3-oxy-8-dimethylethoxysilyloctyl-5'-dimethylethoxysilylpentyl-ethylamine,
3-oxy-9-trimethoxysilylnonyl-6'-trimethoxysilylhexyl-methylamine,
3-oxy-9-methyldimethoxysilylnonyl-6'-methyldimethoxysilylhexyl-methylamine,
3-oxy-9-dimethylmethoxysilylnonyl-6'-dimethylmethoxysilylhexyl-methylamine,
3-oxy-9-triethoxysilylnonyl-6'-triethoxysilylhexyl-methylamine,
3-oxy-9-methyldiethoxysilylnonyl-6'-methyldiethoxysilylhexyl-methylamine,
3-oxy-9-dimethylethoxysilylnonyl-6'-dimethylethoxysilylhexyl-methylamine,
3-oxy-9-trimethoxysilylnonyl-6'-trimethoxysilylhexyl-ethylamine,
3-oxy-9-methyldimethoxysilylnonyl-6'-methyldimethoxysilylhexyl-ethylamine,
3-oxy-9-dimethylmethoxysilylnonyl-6'-dimethylmethoxysilylhexyl-ethylamine,
3-oxy-9-triethoxysilylnonyl-6'-triethoxysilylhexyl-ethylamine,
3-oxy-9-methyldiethoxysilylnonyl-6'-methyldiethoxysilylhexyl-ethylamine,
3-oxy-9-dimethylethoxysilylnonyl-6'-dimethylethoxysilylhexyl-ethylamine,
2-methyl-3-oxy-6-trimethoxysilylhexyl-3'-trimethoxysilylpropylamine,
2-methyl-3-oxy-6-methyldimethoxysilylhexyl-3'-methyldimethoxysilylpropylamine,
2-methyl-3-oxy-6-dimethylmethoxysilylhexyl-3'-dimethylmethoxysilylpropylamine,
2-methyl-3-oxy-6-triethoxysilylhexyl-3'-triethoxysilylpropylamine,
2-methyl-3-oxy-6-methyldiethoxysilylhexyl-3'-methyldiethoxysilylpropylamine,
2-methyl-3-oxy-6-dimethylethoxysilylhexyl-3'-dimethylethoxysilylpropylamine,
2-methyl-3-oxy-6-trimethoxysilylhexyl-3'-trimethoxysilylpropyl-methylamine,
2-methyl-3-oxy-6-methyldimethoxysilylhexyl-3'-methyldimethoxysilylpropyl-methylamine,
2-methyl-3-oxy-6-dimethylmethoxysilylhexyl-3'-dimethylmethoxysilylpropyl-methylamine,
2-methyl-3-oxy-6-triethoxysilylhexyl-3'-triethoxysilylpropyl-methylamine,
2-methyl-3-oxy-6-methyldiethoxysilylhexyl-3'-methyldiethoxysilylpropyl-methylamine,
2-methyl-3-oxy-6-dimethylethoxysilylhexyl-3'-dimethylethoxysilylpropyl-methylamine,
2-methyl-3-oxy-6-trimethoxysilylhexyl-3'-trimethoxysilylpropyl-ethylamine,
2-methyl-3-oxy-6-methyldimethoxysilylhexyl-3'-methyldimethoxysilylpropyl-ethylamine,
2-methyl-3-oxy-6-dimethylmethoxysilylhexyl-3'-dimethylmethoxysilylpropyl-ethylamine,
2-methyl-3-oxy-6-triethoxysilylhexyl-3'-triethoxysilylpropyl-ethylamine,
2-methyl-3-oxy-6-methyldiethoxysilylhexyl-3'-methyldiethoxysilylpropyl-ethylamine,
2-methyl-3-oxy-6-dimethylethoxysilylhexyl-3'-dimethylethoxysilylpropyl-ethylamine,
2-ethyl-3-oxy-6-trimethoxysilylhexyl-3'-trimethoxysilylpropylamine,
2-ethyl-3-oxy-6-methyldimethoxysilylhexyl-3'-methyldimethoxysilylpropylamine,
2-ethyl-3-oxy-6-dimethylmethoxysilylhexyl-3'-dimethylmethoxysilylpropylamine,
2-ethyl-3-oxy-6-triethoxysilylhexyl-3'-triethoxysilylpropylamine,
2-ethyl-3-oxy-6-methyldiethoxysilylhexyl-3'-methyldiethoxysilylpropylamine,
2-ethyl-3-oxy-6-dimethylethoxysilylhexyl-3'-dimethylethoxysilylpropylamine,
2-ethyl-3-oxy-6-trimethoxysilylhexyl-3'-trimethoxysilylpropyl-methylamine,
2-ethyl-3-oxy-6-methyldimethoxysilylhexyl-3'-methyldimethoxysilylpropyl-methylamine,
2-ethyl-3-oxy-6-dimethylmethoxysilylhexyl-3'-dimethylmethoxysilylpropyl-methylamine,
2-ethyl-3-oxy-6-triethoxysilylhexyl-3'-triethoxysilylpropyl-methylamine,
2-ethyl-3-oxy-6-methyldiethoxysilylhexyl-3'-methyldiethoxysilylpropyl-methylamine,
2-ethyl-3-oxy-6-dimethylethoxysilylhexyl-3'-dimethylethoxysilylpropyl-methylamine,
2-ethyl-3-oxy-6-trimethoxysilylhexyl-3'-trimethoxysilylpropyl-ethylamine,
2-ethyl-3-oxy-6-methyldimethoxysilylhexyl-3'-methyldimethoxysilylpropyl-ethylamine,
2-ethyl-3-oxy-6-dimethylmethoxysilylhexyl-3'-dimethylmethoxysilylpropyl-ethylamine,
2-ethyl-3-oxy-6-triethoxysilylhexyl-3'-triethoxysilylpropyl-ethylamine,
2-ethyl-3-oxy-6-methyldiethoxysilylhexyl-3'-methyldiethoxysilylpropyl-ethylamine, and
2-ethyl-3-oxy-6-dimethylethoxysilylhexyl-3'-dimethylethoxysilylpropyl-ethylamine.

The production method of the bisalkoxysilane compound represented by the general formula (1) of the present invention is, for example, a method wherein a diolefin compound represented by the following general formula (2): 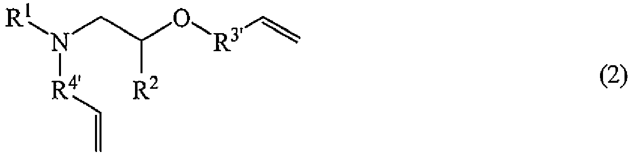 wherein R¹ and R² are as defined above, R^{3'} is a straight chain or branched divalent hydrocarbon group containing 1 to 8 carbon atoms, and R^{4'} is a straight chain or branched divalent hydrocarbon group containing 1 to 8 carbon atoms which may also contain a heteroatom is reacted with an organosilane compound represented by the following general formula (3): 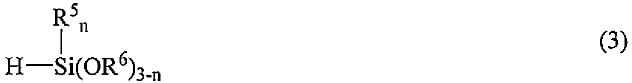 wherein R⁵ and R⁶ are respectively a monovalent hydrocarbon group containing 1 to 10 carbon atoms, and n is 0, 1, or 2 in the presence of a platinum catalyst.

In the formula (2), R^{3'} and R^{4'} are respectively a straight chain or branched divalent hydrocarbon group containing 1 to 8, and in particular, 1 to 4 carbon atoms. Exemplary such groups include alkylene groups such as methylene group, ethylene group, trimethylene group, tetramethylene group, hexamethylene group, and isobutylene group, and the preferred is methylene group in view of the availability of the starting material. R^{4'} may contain a heteroatom such as oxygen atom, nitrogen atom, or sulfur atom. R¹, R², R⁵, R⁶, and n are as described above.

Exemplary diolefin compounds represented by the general formula (2) include bis(allyloxyethyl)amine, bis(allyloxyethyl)methylamine, bis(allyloxyethyl)ethylamine, bis(butenyloxyethyl)amine, bis(butenyloxyethyl)methylamine, bis(butenyloxyethyl)ethylamine, bis(pentenyloxyethyl)amine, bis(pentenyloxyethyl)methylamine, bis(pentenyloxyethyl)ethylamine, bis(hexenyloxyethyl)amine, bis(hexenyloxyethyl)methylamine, bis(hexenyloxyethyl)ethylamine, allyl-allyloxyethylamine, allyl-allyloxyethyl-methylamine, allyl-allyloxyethyl-ethylamine, butenyl-butenyloxyethylamine, butenyl-butenyloxyethyl-methylamine, butenyl-butenyloxyethyl-ethylamine, pentenyl-pentenyloxyethylamine, pentenyl-pentenyloxyethyl-methylamine, pentenyl-pentenyloxyethyl-ethylamine, hexenyl-hexenyloxyethylamine, hexenyl-hexenyloxyethyl-methylamine, and hexenyl-hexenyloxyethyl-ethylamine.

Exemplary organosilane compounds represented by the general formula (3) include trimethoxysilane, methyldimethoxysilane, dimethylmethoxysilane, triethoxysilane, methyldiethoxysilane, and dimethylethoxysilane.

The blend ratio of the diolefin compound represented by the general formula (2) and the organosilane compound represented by the general formula (3) is not particularly limited. The blend ratio, however, is preferably in the range of 1.5 to 3.0 moles, and in particular, 1.8 to 2.2 moles of the compound represented by the general formula (3) in relation to 1 mole of the compound represented by the general formula (2) in view of the reactivity and the productivity.

Exemplary platinum catalysts used in the reaction as described above include chloroplatinic acid, alcohol solution of chloroplatinic acid, toluene or xylene solution of platinum-1,3-divinyl-1,1,3,3-tetramethyldisiloxane complex, tetrakistriphenylphosphine platinum, dichlorobistriphenylphosphine platinum, dichlorobisacetonitrile platinum, dichlorobisbenzonitrile platinum, dichlorocyclooctadiene platinum, and platinum-active carbon.

Amount of the platinum catalyst used is not particularly limited. The amount of the platinum catalyst, however, is preferably in the range of 0.000001 to 0.01 mole, and in particular, 0.00001 to 0.001 mole in relation to 1 mole of the diolefin compound represented by the general formula (2) in view of the reactivity and the productivity.

The reaction temperature in this reaction is not particularly limited, and the preferred temperature is 0 to 200°C, and in particular, 20 to 150°C. The reaction time is also not particularly limited, and the preferred time is 1 to 40 hours, and in particular, 1 to 20 hours. The reaction is preferably carried out in the reaction atmosphere of air or inert gas such as nitrogen or argon.

It is to be noted that the reaction as described above may proceed either in the absence of a solvent or by using a solvent. Exemplary solvents used include hydrocarbon solvents such as pentane, hexane, cyclohexane, heptane, isooctane, benzene, toluene, and xylene, ether solvents such as diethylether, tetrahydrofuran, and dioxane, ester solvents such as ethyl acetate and butyl acetate, aprotic polar solvents such as acetonitrile, N,N-dimethylformamide, and N-methylpyrrolidone, chlorinated hydrocarbon solvents such as dichloromethane and chloroform, which may be used alone or in combination of two or more.

The reaction as described above may progress with no particular use of additives. However, the reaction can be more quickly completed by adding particular additives. Exemplary such additives include ammonium salts such as ammonium hydrogencarbonate, ammonium carbonate, ammonium acetate, and ammonium carbamate and carboxylic amides such as acetamide, formamide, and benzamide.

### EXAMPLES

Next, the present invention is described in further detail by referring to the Example and Synthetic Example which by no means limit the scope of the present invention.

### Synthetic Example 1

### Synthesis of allyl-allyloxyethyl-methylamine

In a flask equipped with a stirrer, a reflux condenser, a dropping funnel, and a thermometer, 150.8 g (2.008 mole) of methylaminoethanol, 204.2 g (5.105 mole) of sodium hydroxide, 8.2 g (0.020 mole) of trioctylmethylammonium chloride, and 200 ml of tetrahydrofuran were placed, and the mixture was heated to 60°C. After stabilization of the inner temperature to 60°C, a mixture of 352 g (4.60 mole) of allyl chloride and 3.9 g of trioctylmethylammonium chloride was added dropwise in 2 hours, and the stirring was continued for 2 hours at the same temperature. After cooling to room temperature, 800 g of water was added, and the mixture was stirred at room temperature until the salt had been dissolved. After the separation, the organic layer was distilled off to obtain 213.8 g of a fraction of allyl-allyloxyethyl-methylamine having a boiling point of 95-96°C/6.0 kPa.

### Example 1

### Synthesis of 3-oxy-6-trimethoxysilylhexyl-3'-trimethoxysilylpropyl-methylamine

In a flask equipped with a stirrer, a reflux condenser, a dropping funnel, and a thermometer, 62.2 g (0.401 mole) of allyl-allyloxyethyl-methylamine synthesized in the Synthetic Example 1, 0.62 g of acetamide, and 0.53 g of a solution of platinum-1,3-divinyl-1,1,3,3-tetramethyldisiloxane complex in toluene were placed and the mixture was heated to 60°C. After stabilization of the inner temperature to 60°C, 97.7 g (0.800 mole) of trimethoxysilane was added dropwise in 3 hours, and the stirring was continued for 4 hours at the same temperature. The reaction mixture was distilled to obtain 113.2 g of a fraction having a boiling point of 145-157°C/0.2 kPa.

The thus obtained fraction was evaluated by mass spectrum, ¹H-NMR spectrum, and IR spectrum.

| | |
|---|---|
| Mass spectrum: | m/z 399 250 208 121 91 72 |
| ¹H-NMR spectrum | (solvent, deuterochloroform): shown in the chart of FIG. 1. |
| IR spectrum: | shown in the chart of FIG. 2. |

These results confirmed that the resulting compound was 3-oxy-6-trimethoxysilylhexyl-3'-trimethoxysilylpropyl-methylamine.

### Example 2

### Synthesis of bis(trimethoxysilylpropyloxyethyl)methylamine

In a flask equipped with a stirrer, a reflux condenser, a dropping funnel, and a thermometer, 40.0 g (0.201 mole) of bis(hydroxyethyloxyallyl)methylamine, 0.31 g of acetamide, and 0.27 g of a solution of platinum-1,3-divinyl-1,1,3,3-tetramethyldisiloxane complex in toluene were placed and the mixture was heated to 60°C. After stabilization of the inner temperature to 60°C, 49.1 g (0.402 mole) of trimethoxysilane was added dropwise in 2 hours, and the stirring was continued for 5 hours at the same temperature. The reaction mixture was distilled to obtain 58.6 g of a fraction having a boiling point of 157-170°C/0.4 kPa.

The thus obtained fraction was evaluated by mass spectrum, ¹H-NMR spectrum, and IR spectrum.

| | |
|---|---|
| Mass spectrum: | m/z 443 294 250 121 72 44 |
| ¹H-NMR spectrum | (solvent, deuterochloroform): shown in the chart of FIG. 3. |
| IR spectrum: | shown in the chart of FIG. 4. |

These results confirmed that the resulting compound was bis(trimethoxysilylpropyloxyethyl)methylamine.

## Claims

1. A bisalkoxysilane compound represented by the following general formula (1): 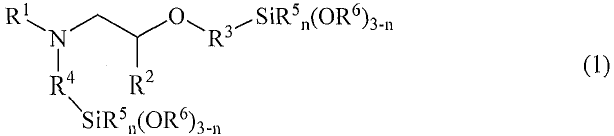 wherein R¹ is hydrogen atom or an unsubstituted monovalent hydrocarbon group containing 1 to 10 carbon atoms and R² is hydrogen atom or an unsubstituted or substituted monovalent hydrocarbon group containing 1 to 10 carbon atoms wherein the substituted monovalent hydrocarbon group has a substituent selected from among alkoxy group and a group comprising a halogen atom, R³ is a straight chain or branched divalent hydrocarbon group containing 3 to 10 carbon atoms, R⁴ is a straight chain or branched divalent hydrocarbon group containing 3 to 10 carbon atoms optionally containing a heteroatom, R⁵ and R⁶ are respectively a monovalent hydrocarbon group containing 1 to 10 carbon atoms,and n is 0, 1, or 2.

2. A method for producing a bisalkoxysilane compound of claim 1 comprising the step of reacting a diolefin compound represented by the following general formula (2): 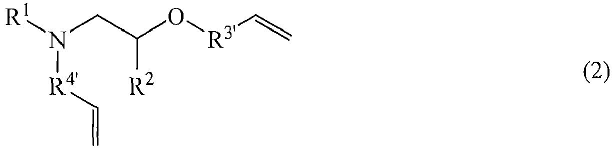 wherein R¹ and R² are as defined above, R^{3'} is a straight chain or branched divalent hydrocarbon group containing 1 to 8 carbon atoms, and R^{4'} is a straight chain or branched divalent hydrocarbon group containing 1 to 8 carbon atoms optionally containing a heteroatom with an organosilane compound represented by the following general formula (3): 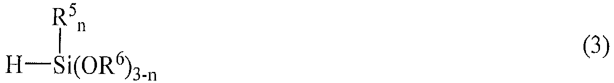 wherein R⁵ and R⁶ are as defined above, and n is 0, 1, or 2 in the presence of a platinum catalyst.

## Patentansprüche

1. Bisalkoxysilanverbindung, wiedergegeben durch die folgende allgemeine Formel (1): 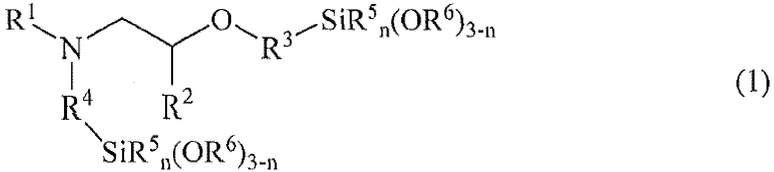 worin R¹ Wasserstoffatom oder eine unsubstituierte, einwertige, 1 bis 10 Kohlenstoffatome enthaltende Kohlenwasserstoffgruppe ist und R² Wasserstoffatom oder eine unsubstituierte oder substituierte, einwertige, 1 bis 10 Kohlenstoffatome enthaltende Kohlenwasserstoffgruppe ist, wobei die substituierte, einwertige Kohlenwasserstoffgruppe einen Substituenten aufweist, gewählt aus Alkoxygruppe und einer ein Halogenatom enthaltenden Gruppe, R³ eine geradkettige oder verzweigte, zweiwertige, 3 bis 10 Kohlenstoffatome enthaltende Kohlenwasserstoffgruppe ist, R⁴ eine geradkettige oder verzweigte, zweiwertige, 3 bis 10 Kohlenstoffatome enthaltende Kohlenwasserstoffgruppe ist, die wahlweise ein Heteroatom enthält, R⁵ und R⁶ jeweils eine einwertige, 1 bis 10 Kohlenstoffatome enthaltende Kohlenwasserstoffgruppe sind, und n 0, 1 oder 2 ist.

2. Verfahren zur Herstellung einer Bisalkoxysilanverbindung nach Anspruch 1, umfassend den Schritt des Umsetzens einer Diolefinverbindung, wiedergegeben durch die folgende allgemeine Formel (2): 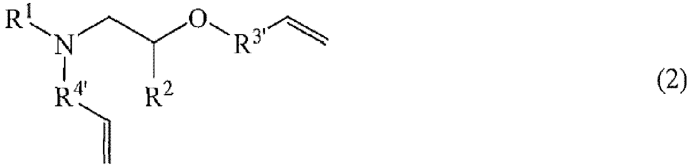 worin R¹und R² wie oben definiert sind, R^{3'} eine geradkettige oder verzweigte, zweiwertige, 1 bis 8 Kohlenstoffatome enthaltende Kohlenwasserstoffgruppe ist, und R^{4'} eine geradkettige oder verzweigte, zweiwertige, 1 bis 8 Kohlenstoffatome enthaltende Kohlenwasserstoffgruppe ist, die wahlweise ein Heteroatom enthält, mit einer Organosilanverbindung, wiedergegeben durch die folgende allgemeine Formel (3): 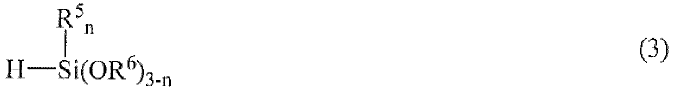 worin R⁵ und R⁶ wie oben definiert sind, und n 0, 1 oder 2 ist, in Gegenwart eines Platinkatalysators.

## Revendications

1. Un composé de bisalcoxysilane représenté par la formule générale (1) suivante: 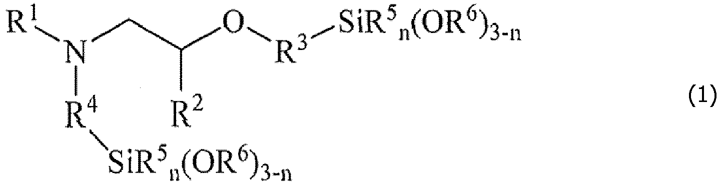 dans laquelle R¹ représente un atome d'hydrogène ou un groupe hydrocarboné monovalent non substitué contenant de 1 à 10 atomes de carbone et R² représente un atome d'hydrogène ou un groupe hydrocarboné monovalent substitué ou non substitué contenant de 1 à 10 atomes de carbone, dans lequel le groupe hydrocarboné monovalent substitué a substituant choisi parmi le groupe alcoxy et un groupe comprenant un atome d'halogène, R³ représente un groupe hydrocarboné divalent à chaîne linéaire ou ramifiée contenant de 3 à 10 atomes de carbone, R⁴ représente un groupe hydrocarboné divalent à chaîne linéaire ou ramifiée contenant de 3 à 10 atomes de carbone et contenant éventuellement un hétéroatome, R⁵ et R⁶ représentent respectivement un groupe hydrocarboné monovalent contenant 1 à 10 atomes de carbone, et n est 0, 1 ou 2.

2. Un procédé de production d'un composé de bisalkoxysilane selon la revendication 1, comprenant l'étape de réaction d'un composé de dioléfine représenté par la formule générale (2) suivante: 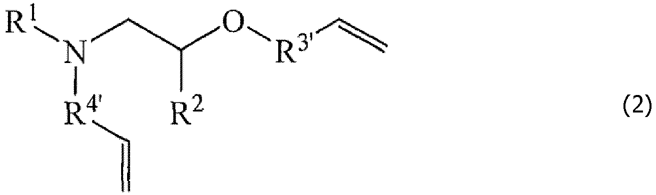 dans laquelle R¹ et R² sont tels que définis ci-dessus, R^{3'} est un groupe hydrocarboné divalent à chaîne linéaire ou ramifiée contenant 1 à 8 atomes de carbone, et R^{4'} est un groupe hydrocarboné divalent à chaîne linéaire ou ramifiée contenant 1 à 8 atomes de carbone contenant éventuellement un hétéroatome avec un composé organosilane représenté par la formule générale (3) suivante: 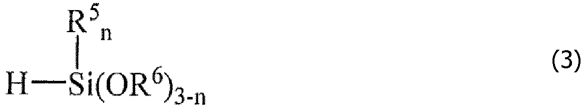 dans laquelle R⁵ et R⁶ sont tels que définis ci-dessus, et n vaut 0, 1 ou 2 en présence d'un catalyseur au platine.
